# EUROPÄISCHE PATENTSCHRIFT

(11) **EP 2 753 164 B1**
(45) Veröffentlichungstag und Bekanntmachung des Hinweises auf die Patenterteilung: **28.02.2018**
(21) Anmeldenummer: 12735535.2
(22) Anmeldetag: 16.07.2012
(51) Int. Cl.: A01D 34/00

(54) **Autonomer Rasenmäher**
Autonomous lawn mower
Todeuse à gazon autonome

(30) Priorität: 09.09.2011 DE 102011082416
(43) Veröffentlichungstag der Anmeldung: 16.07.2014
(73) Patentinhaber: Robert Bosch GmbH, 70442 Stuttgart (DE)
(72) Erfinder: BIBER, Peter, 72119 Poltringen (DE); PETEREIT, Steffen, 71691 Freiberg A. N. (DE); KOCH, Christoph, 70178 Stuttgart (DE); ALBERT, Amos, 71229 Leonberg (DE)
(86) Internationale Anmeldenummer: PCT/EP2012/063882
(87) Internationale Veröffentlichungsnummer: WO 2013/034345

(56) Entgegenhaltungen:
- EP-A2- 1 892 599
- DE-A1-102007 023 157
- DE-A1-102008 001 813
- DE-A1-102008 011 947
- GB-A- 2 386 970

## Beschreibung

### Stand der Technik

Es ist bereits ein autonomer Rasenmäher, mit einer Recheneinheit vorgeschlagen worden, der dazu vorgesehen ist, eine zu bearbeitende Fläche in Bahnen abzufahren.

### Offenbarung der Erfindung

Die Erfindung gemäß Anspruch 1 geht aus von einem autonomen Rasenmäher, mit einer Recheneinheit, der dazu vorgesehen ist, eine zu bearbeitende Fläche in Bahnen abzufahren.

Es wird vorgeschlagen, dass die Recheneinheit dazu vorgesehen ist, einen Überlapp der Bahnen abhängig von wenigstens einem Parameter einzustellen. Unter einem "autonomen Rasenmäher" soll in diesem Zusammenhang insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Besonders bevorzugt ist das Gerät dazu vorgesehen, eine Fläche abzufahren und auf dieser Fläche eine Arbeit zu verrichten. Ferner soll unter einer "Recheneinheit" insbesondere eine Einheit mit einem Informationseingang, einer Informationsverarbeitung und/oder einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Die Recheneinheit ist vorzugsweise innerhalb eines Teils des autonomen Rasenmähers angeordnet, das zur Verrichtung einer Arbeit angetrieben über die zu bearbeitende Fläche bewegt wird. Alternativ und/oder zusätzlich könnte jedoch auch die Recheneinheit außerhalb des Teils des autonomen Rasenmähers angeordnet sein, wie beispielsweise in einer Fernbedienung und/oder einer stationären Station. Eine Verbindung zwischen dem Teil und der Recheneinheit des autonomen Rasenmähers kann insbesondere über eine drahtlose Verbindung erfolgen. Dadurch kann insbesondere die Recheneinheit des autonomen Rasenmähers aus dem Teil des autonomen Rasenmähers ausgelagert werden, um eine Belastung durch Schmutz gering zu halten. Ferner kann dadurch ein Gewicht des Teils des autonomen Rasenmähers gering gehalten werden. Unter einer "zu bearbeitenden Fläche" soll in diesem Zusammenhang insbesondere eine Fläche verstanden werden, welche einen Arbeitsbereich definiert. Unter einem "Überlapp" soll in diesem Zusammenhang insbesondere eine Breite einer Fläche verstanden werden, welche einen Überschneidungsbereich von zwei zumindest annähernd parallel zueinander verlaufenden Bahnen definiert. Ferner kann ein Überlapp bei einer konstanten Bahnbreite auch durch eine Differenz zwischen einer Bahnbreite und einem relativen Abstand zweier Bahnen zueinander definiert werden. Unter einem "relativen Abstand zweier Bahnen" soll in diesem Zusammenhang insbesondere ein Abstand der Mittellinien der Bahnen verstanden werden. Unter einem "Parameter" soll in diesem Zusammenhang insbesondere zumindest ein Wert verstanden werden, der zumindest eine charakteristische Eigenschaft und/oder eine Kenngröße und/oder eine Einflussgröße definiert. DE 10 2007 023 157 A1 offenbart die Merkmale des Oberbegriffs des Anspruchs 1. Durch die erfindungsgemäße Ausgestaltung des autonomen Rasenmähers kann besonders vorteilhaft ein effizienter und effektiver Arbeitsgang des autonomen Rasenmähers realisiert werden. Vorzugsweise kann die Recheneinheit dazu vorgesehen sein, abhängig von dem Überlapp eine Geschwindigkeit und/oder ein Drehmoment einer Antriebseinheit des autonomen Arbeitsgeräts anzupassen. Dadurch kann vorteilhaft bei einem großen Überlapp eine Geschwindigkeit erhöht werden und bei einem geringen Überlapp eine Geschwindigkeit verringert werden. Zudem wäre auch denkbar, eine Geschwindigkeit und/oder ein Drehmoment über weitere zur Berechnung eines Überlapps benötigte Parameter anzupassen.

Es wird ferner vorgeschlagen, dass die Recheneinheit dazu vorgesehen ist, den Überlapp für verschiedene Teilbereiche und/oder für verschiedene Bahnen der zu bearbeitenden Fläche differenziert einzustellen. Vorzugsweise weist der Teilbereich zumindest einen annähernd gleichbleibenden Parameter auf. Dadurch kann eine zu bearbeitende Fläche vorteilhaft differenziert bezüglich des Überlapps bearbeitet werden, um eine maximale Effizienz zu erreichen. Die Recheneinheit ist dazu vorgesehen, den Überlapp einer Bahn abhängig von zumindest einem spezifischen Parameter der entsprechenden Bahn einzustellen. Dabei soll unter einem "spezifischen Parameter" insbesondere ein Parameter verstanden werden, der sich von einer Bahn zu einer anderen Bahn verändern kann, jedoch über eine entsprechende Bahn zumindest annähernd gleich bleibt. Dadurch kann vorteilhaft ein Überlapp einzelner Bahnen an die jeweilige Bahn angepasst werden.

Ferner wird vorgeschlagen, dass die Recheneinheit dazu vorgesehen ist, zumindest einen Bahnlängenparameter zu berücksichtigen. Unter einem "Bahnlängenparameter" soll in diesem Zusammenhang insbesondere ein Parameter verstanden werden, der direkt oder indirekt eine Kenngröße für eine Bahnlänge darstellt und/oder vorzugsweise direkt oder indirekt auf eine erwartete Bahnlänge rückschließen lässt und/oder vorzugsweise von der erwarteten Bahnlänge gebildet ist. Dabei soll in diesem Zusammenhang unter einer "erwarteten Bahnlänge" insbesondere eine Bahnlänge verstanden werden, welche der autonome Rasenmäher ohne für den Rasenmäher unvorhersehbare Zwischenfälle, wie beispielsweise ein ihm unbekanntes Hindernis, auf der zu bearbeitenden Fläche zurücklegt. Unter einer "Bahnlänge" soll in diesem Zusammenhang insbesondere eine Länge einer Strecke verstanden werden, die das Arbeitsgerät ohne eine wesentliche Richtungsänderung zurücklegt. Dabei soll unter "ohne eine wesentliche Richtungsänderung" insbesondere eine Richtungsänderung um weniger als 10°, vorzugsweise um weniger als 5° und besonders bevorzugt um weniger als 2° verstanden werden. Dadurch kann vorteilhaft ein bahnspezifischer Parameter berücksichtigt werden, wodurch sinnvoll und effizient ein Überlapp angepasst werden kann.

Dabei ist insbesondere denkbar, dass die Recheneinheit dazu vorgesehen ist, bei einer erwarteten langen Bahnlänge einen Überlapp größer als bei einer erwarteten kurzen Bahnlänge einzustellen. Dadurch kann über die erwartete lange Bahnlänge sichergestellt werden, dass die Fläche bis zu einer nächstliegenden Bahn vollständig bearbeitet wird. Bei einer erwarteten kurzen Bahnlänge kann dadurch insbesondere eine Bearbeitungszeit und eine Belastung der zu bearbeitenden Fläche gering gehalten werden.

Des Weiteren ist die Recheneinheit dazu vorgesehen zumindest einen Untergrundparameter zu berücksichtigen. Unter einem "Untergrundparameter" ist in diesem Zusammenhang ein Parameter zu verstehen der zumindest von einer Beschaffenheit und/oder einer Eigenschaft des Untergrunds abhängt, wobei der Untergrundparameter als eine Grashöhe und/oder-dichte ausgebildet ist. Dadurch können vorteilhaft spezifische Eigenschaften der zu bearbeitenden Fläche berücksichtigt werden. Die Recheneinheit ist dazu vorgesehen bei hohem und dichtem Gras gegenüber niedrigem und lichtem Gras einen Überlapp groß einzustellen. Dadurch kann eine Überlastung des Mähmotors vorteilhaft vermieden werden. Die Recheneinheit weist zumindest einen Sensor auf, der dazu vorgesehen ist, die Grashöhe und/oder -dichte zu sensieren. Unter einem "Sensor" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch das Erzeugen und Aussenden eines elektrischen Messsignals, und/oder passiv, wie insbesondere durch eine Erfassung von Eigenschaftsänderungen eines Sensorbauteils, stattfinden kann. Dadurch kann zuverlässig und vollkommen autonom ein Untergrundparameter aktiv und insbesondere dynamisch berücksichtigt werden.

Ferner wird vorgeschlagen, dass die Recheneinheit zumindest eine Eingabeeinheit aufweist, welche dazu vorgesehen ist, manuelle Eingaben von Parametern durch einen Bediener aufzunehmen. Unter einer "Eingabeeinheit" soll in diesem Zusammenhang insbesondere eine Einheit verstanden werden, die zumindest ein Bedienelement und vorzugsweise zumindest ein Ausgabeelement, wie insbesondere ein Display, aufweist. Vorzugsweise ist die Eingabeeinheit direkt mit der Recheneinheit verbunden. Alternativ oder zusätzlich könnte die Eingabeeinheit und/oder zumindest eine zweite Eingabeeinheit getrennt von der Recheneinheit und insbesondere getrennt von dem Teil des autonomen Rasenmähers angeordnet sein, das zur Verrichtung einer Arbeit angetrieben über die zu bearbeitende Fläche bewegt wird. Die Eingabeeinheit könnte beispielsweise in einer Fernbedienung und/oder in einer stationären Station des autonomen Rasenmähers angeordnet sein. Eine Informationsübertragung zu der Recheneinheit könnte dabei über eine kabellose Funkverbindung und/oder über eine Schnittstelle erfolgen. Dabei soll unter einer "stationären Station" insbesondere eine Station des autonomen Rasenmähers verstanden werden, welche dazu vorgesehen ist, das Teil des autonomen Rasenmähers während einer Ruhephase aufzunehmen. Vorzugsweise ist die Station dazu vorgesehen, einen Energiespeicher des Teils des autonomen Rasenmähers aufzufüllen. Ein Auffüllen kann beispielsweise über ein Auftanken, das Wechseln eines Energieträgers und/oder durch das Aufladen eines Akkumulators erfolgen, es sind jedoch auch andere, dem Fachmann als sinnvoll erscheinende Methoden denkbar. Besonders bevorzugt ist die Station in einem Randbereich der zu bearbeitenden Fläche angeordnet und dient als Start- und/oder Endpunkt für das Teil des autonomen Rasenmähers. Dadurch können einfach und bequem Parameter durch einen Bediener eingegeben werden.

Durch die Ausgestaltung kann der autonome Rasenmäher vorteilhaft auf die Bedürfnisse eines Bedieners eingestellt werden. Insbesondere können dadurch benutzerspezifische Vorgaben erfasst werden.

Es wird weiter vorgeschlagen, dass die Recheneinheit dazu vorgesehen ist, ein in die Eingabeeinheit eingegebenes gewünschtes Ergebnis bei einer Einstellung des Überlapps zu berücksichtigen. Dabei soll unter einem "gewünschten Ergebnis" insbesondere ein von einem Bediener gewünschtes Resultat verstanden werden, wie beispielsweise eine bestimmte Zeitvorgabe und/oder ein bestimmter Qualitätsgrad und/oder eine Schonung des Rasens. Dadurch können vorteilhaft durch einfache Eingaben eines Bedieners komplexe Randbedingungen geschaffen werden. Ferner können dadurch ohne die Eingabe mehrerer Parameter durch den Bediener die Vorgaben des Bedieners berücksichtigt werden.

Des Weiteren wird vorgeschlagen, dass die Recheneinheit dazu vorgesehen ist, einen in die Eingabeeinheit eingegebenen Überlappparameter, für die zu bearbeitende Fläche und/oder für verschiedene Teilbereiche und/oder Bedingungen der zu bearbeitenden Fläche, zu berücksichtigen. Wird beispielsweise von einem Bediener über die Eingabeeinheit ein Überlappparameter eingegeben welcher einen Überlapp reduziert, kann eine Mähzeit verringert, ein Verschleiß reduziert und/oder der Rasen geschont werden. Wird dagegen ein Überlapp vergrößert, kann ein vollständiges Bearbeiten der zu bearbeitenden Fläche sichergestellt werden. Unter einem "Überlappparameter" soll in diesem Zusammenhang insbesondere ein Parameter verstanden werden, der direkt eine Dimensionierung eines Überlapps bestimmt. Unter "Bedingungen der zu bearbeitenden Fläche" sollen insbesondere besondere Randbedingungen verstanden werden, welche sich je nach Stellung und/oder Ausrichtung trotz einer gleichbleibenden Position des autonomen Rasenmähers verändern. Darunter können beispielweise Bedingungen verstanden werden wie eine Hangneigung, bei der zwischen parallel zu einem Hang und senkrecht zum Hang unterschieden werden kann. Dadurch können differierende Bedingungen der zu bearbeitenden Fläche einfach durch einen Bediener eingegeben werden, wodurch wiederum Sensoren und andere Erfassungseinheiten eingespart werden können.

Vorzugsweise kann die Recheneinheit auch dazu vorgesehen sein, einen von einem Bediener gewählten Geschwindigkeitsparameter bei der Einstellung des Überlapps zu berücksichtigen. Dadurch kann vorteilhaft eine Überlastung des Antriebsmotors vermieden werden.

Ferner wird vorgeschlagen, dass die Recheneinheit dazu vorgesehen ist, bei einer Bestimmung einer erwarteten Bahnlänge vor dem Abfahren einer Bahn eine eigene Position innerhalb einer Umrisskarte zu bestimmen und einen Schnittpunkt einer erwarteten Bahnrichtung mit der Umrisskarte zu berechnen. Dabei soll in diesem Zusammenhang unter einer "erwarteten Bahnlänge" insbesondere eine Bahnlänge verstanden werden, welche der autonome Rasenmäher ohne dafür unvorhersehbare Zwischenfälle, wie beispielsweise ein unbekanntes Hindernis, auf der zu bearbeitenden Fläche zurücklegt. Unter einer "Umrisskarte" soll in diesem Zusammenhang insbesondere eine virtuelle, in dem Speicher der Recheneinheit hinterlegte Erfassungslinie verstanden werden, welche eine Umrandung der zu bearbeitenden Fläche widergibt. Des Weiteren soll unter einer "erwarteten Bahnrichtung" insbesondere eine erwartete Bewegungsrichtung des autonomen Rasenmähers während einer nachfolgenden Bahn verstanden werden. Dadurch kann vorteilhaft einfach eine erwartete Bahnlänge berechnet werden.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät mit einer Recheneinheit in einer schematischen Darstellung,
- Fig. 2: das erfindungsgemäße autonome Arbeitsgerät auf einer zu bearbeitenden Fläche in einer schematischen Darstellung und
- Fig. 3: einen Teilausschnitt zweier schematisch dargestellter einander überlappender Bahnen des autonomen Arbeitsgeräts.

### Beschreibung des Ausführungsbeispiels

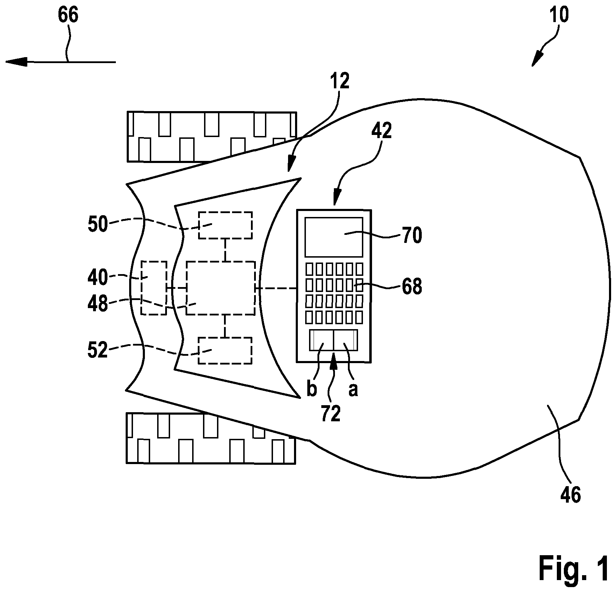

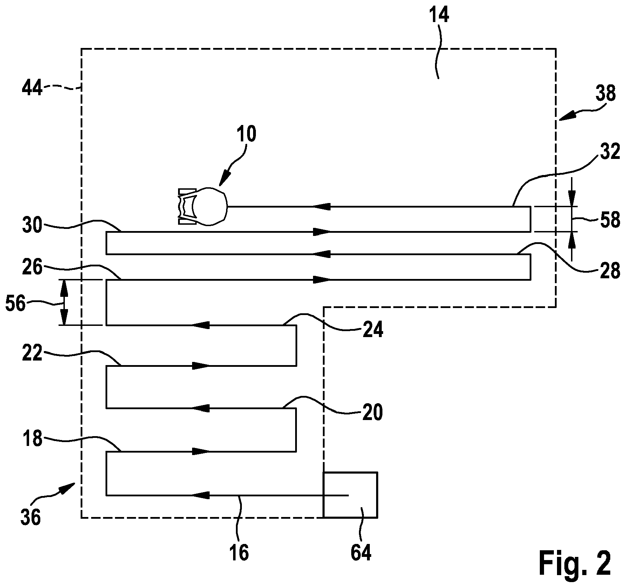

Die Figur 1 zeigt ein erfindungsgemäßes autonomes Arbeitsgerät 10 mit einer Recheneinheit 12. Das autonome Arbeitsgerät 10 ist von einem autonomen Rasenmäher gebildet. Der autonome Rasenmäher 10 weist eine Recheneinheit 12 auf und ist dazu vorgesehen, eine zu bearbeitende Fläche 14 in Bahnen 16, 18, 20, 22, 24, 26, 28, 30, 32 abzufahren (Figur 2). Ferner weist der autonome Rasenmäher 10 einen nicht weiter sichtbaren Antriebsmotor auf. Die zu bearbeitende Fläche 14 ist von einer Rasenfläche gebildet. Die Recheneinheit 12 ist innerhalb eines Gehäuses 46 des Rasenmähers 10 angeordnet. Die Recheneinheit 12 weist einen Rechenkern 48 und ein Speicherelement 50 auf. Der Rechenkern 48 dient zur Informationsverarbeitung und das Speicherelement 50 dient zur Informationsspeicherung. Der Rechenkern 48 und das Speicherelement 50 sind über eine Leitung verbunden. Ferner ist die Recheneinheit 12 mit einer Ortungseinheit 52 verbunden, welche sich ebenfalls in dem Gehäuse 46 des autonomen Rasenmähers 10 befindet und zu einer Positionsbestimmung des autonomen Rasenmähers 10 vorgesehen ist. Die Ortungseinheit 52 ist über eine Leitung mit dem Rechenkern 48 der Recheneinheit 12 verbunden. Die Recheneinheit 12 ist dazu vorgesehen, einen Überlapp 34 der Bahnen 16, 18, 20, 22, 24, 26, 28, 30, 32 abhängig von mehreren Parametern einzustellen. Der Überlapp 34 wird durch eine Veränderung der Querbewegung des autonomen Rasenmähers 10 zwischen den Bahnen 16, 18, 20, 22, 24, 26, 28, 30, 32 eingestellt.

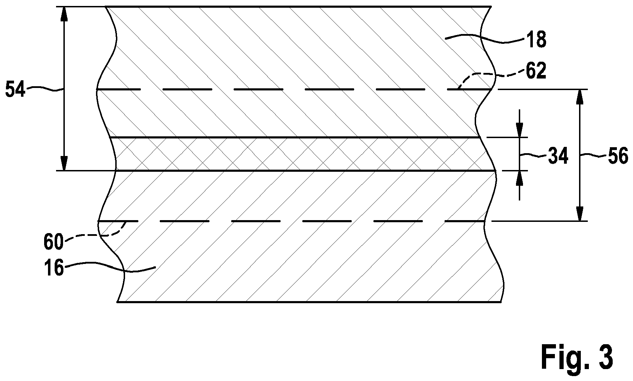

Der Überlapp 34 ist durch eine Differenz zwischen einer Bahnbreite 54 und einem relativen Abstand 56, 58 zweier Bahnen 16, 18, 20, 22, 24, 26, 28, 30, 32 zueinander definiert. Der relativen Abstand 56, 58 zweier Bahnen 16, 18, 20, 22, 24, 26, 28, 30, 32 stellt den Abstand 56, 58 zwischen Mittellinien 60, 62 der Bahnen 16, 18, 20, 22, 24, 26, 28, 30, 32 dar. Die Figur 3 stellt hierbei lediglich einen Teilausschnitt der beiden Bahnen 16, 18 dar. Die Bahnen 16, 18 weisen einen identische Bahnbreite 54 auf und sind um den Abstand 56 relativ zueinander beabstandet, wodurch sich der Überlapp 34 ergibt.

Ferner ist die Recheneinheit 12 dazu vorgesehen, den Überlapp 34 für verschiedene Teilbereiche 36, 38 und für verschiedene Bahnen 16, 18, 20, 22, 24, 26, 28, 30, 32 der zu bearbeitenden Fläche 14 differenziert einzustellen. Im Fall einer wie in Figur 2 gezeigten zu bearbeitenden Fläche 14, werden für zwei Teilbereiche 36, 38 verschiedene Überlappe 34 eingestellt, wodurch sich auch die relativen Abstände 56, 58 der Bahnen 16, 18, 20, 22, 24, 26, 28, 30, 32 verändern. Die zu bearbeitende Fläche 14 weist senkrecht zu den Bahnen 16, 18, 20, 22, 24, 26, 28, 30, 32 des autonomen Arbeitsgeräts 10 betrachtet einen schmalen Teilbereich 36 und einen breiten Teilbereich 38 auf. An einem von dem breiten Teilbereich 38 abgewandten Ende des schmalen Teilbereichs 36 ist eine Station 64 des autonomen Rasenmähers 10 angeordnet.

Die Recheneinheit 12 ist dazu vorgesehen, einen Bahnlängenparameter zu berücksichtigen. Die Recheneinheit 12 ist dazu vorgesehen, eine erwartete Bahnlänge bei der Einstellung des Überlapps 34 zu berücksichtigen. Die Bahnlängen in dem breiten Teilbereich 38 sind gegenüber den Bahnlängen im schmalen Teilbereich 36 lang. Demnach weisen die Bahnen 26, 28, 30, 32 in dem breiten Teilbereich 38 einen großen Überlapp auf im Vergleich zu den Überlappen 34 des schmalen Teilbereichs 36. Demnach weisen die Bahnen 26, 28, 30, 32 des breiten Teilbereichs 38 im Vergleich zu den Bahnen 16, 18, 20, 22, 24 des schmalen Teilbereichs 36 einen geringen relativen Abstand 58 zwischen den Bahnen 26, 28, 30, 32 auf.

Die Recheneinheit 12 ist dazu vorgesehen, den Überlapp 34 einer der Bahnen 16, 18, 20, 22, 24, 26, 28, 30, 32 abhängig von einem spezifischen Parameter der entsprechenden Bahn 16, 18, 20, 22, 24, 26, 28, 30, 32 einzustellen. Die Recheneinheit 12 ist dazu vorgesehen, den Überlapp 34 einer der Bahnen 16, 18, 20, 22, 24, 26, 28, 30, 32 abhängig von einer erwarteten Bahnlänge der entsprechenden Bahn 16, 18, 20, 22, 24, 26, 28, 30, 32 einzustellen.

Des Weiteren ist die Recheneinheit 12 dazu vorgesehen, einen Untergrundparameter zu berücksichtigen. Die Recheneinheit 12 ist dazu vorgesehen, eine aktuelle Grashöhe und -dichte bei der Einstellung des Überlapps 34 zu berücksichtigen. Bei hohem und dichtem Gras wird ein gegenüber niedrigem und lichtem Gras großer Überlapp 34 eingestellt, um eine Überbelastung des nicht weiter sichtbaren Antriebsmotors zu vermeiden.

Ferner weist die Recheneinheit 12 einen Sensor 40 auf, der dazu vorgesehen ist, zumindest einen Parameter zu sensieren. Der Sensor 40 ist dazu vorgesehen, eine Grashöhe und -dichte zu sensieren. Der Sensor 40 ist in dem Gehäuse 46 des autonomen Arbeitsgeräts 10 angeordnet und ist über eine Leitung mit dem Rechenkern 48 der Recheneinheit 12 verbunden. Der Sensor 40 ist in einem in eine Fahrtrichtung 66 betrachtet vorderen Bereich des Gehäuses 46 angeordnet. Das Gehäuse 46 weist eine nicht weiter sichtbare Öffnung auf, über welche der Sensor 40 eine Grashöhe und -dichte sensieren kann.

Die Recheneinheit 12 weist eine Eingabeeinheit 42 auf, welche dazu vorgesehen ist, manuelle Eingaben von Parametern durch einen Bediener aufzunehmen. Die Eingabeeinheit 42 ist auf dem Gehäuse 46 des autonomen Rasenmähers 10 angeordnet und ist über eine Leitung mit dem Rechenkern 48 der Recheneinheit 12 verbunden. Die Eingabeeinheit 42 weist ein Tastenfeld 68, ein Display 70 und einen Kippschalter 72 auf.

Die Recheneinheit 12 ist dazu vorgesehen, ein in die Eingabeeinheit 42 eingegebenes gewünschtes Ergebnis bei einer Einstellung des Überlapps 34 zu berücksichtigen. In die Eingabeeinheit 42 kann ein Bediener ein gewünschtes Ergebnis eingeben. Eine Eingabe erfolgt über den Kippschalter 72 der Eingabeeinheit 42. Der Kippschalter 72 weist eine Stellung a und eine Stellung b auf. Steht der Kippschalter 72 in einer Stellung a, wird von einem Bediener eine hohe Qualität des Mähergebnisses gewünscht. Steht der Kippschalter 72 in einer Stellung b, wird von dem Bediener ein Energiesparmodus gewünscht. Der Kippschalter 72 kann lediglich in einer der beiden Stellungen a, b stehen. Eine Stellung des Kippschalters 72 wird von der Recheneinheit 12 bei einer Einstellung des Überlapps 34 mit eingerechnet.

Die Recheneinheit 12 ist dazu vorgesehen, einen in die Eingabeeinheit 42 eingegebenen Überlappparameter, für die zu bearbeitende Fläche 14 und für verschiedene Teilbereiche 36, 38 und Bedingungen der zu bearbeitenden Fläche 14, zu berücksichtigen. In die Eingabeeinheit 42 kann über das Tastenfeld 68 ein Überlappparameter eingegeben werden. Der Überlappparameter kann entweder auf die ganze zu bearbeitende Fläche 14 oder auf einen Teilbereich 36, 38 eingestellt werden, in dem der Überlappparameter angewendet werden soll. Der Überlappparameter wird direkt von der Recheneinheit 12 für den entsprechenden Teilbereich 36, 38 eingestellt. Alle weiteren von der Recheneinheit 12 sensierten Parameter oder alle weiteren Bedienparameter werden hierfür nicht berücksichtigt.

Zu Beginn eines Mähvorgangs wird von der Recheneinheit 12 das Vorliegen von Überlappparametern, welche von einem Bediener eingegeben wurden, überprüft. Liegen Überlappparameter vor, wird der Mähvorgang nach diesen Vorgaben durchgeführt, weitere Parameter werden hierbei nicht berücksichtigt. Liegt kein von einem Bediener eingegebener Überlappparameter vor, wird von der Recheneinheit 12 eine Stellung a, b des Kippschalters 72 der Eingabeeinheit 42 überprüft. Je nach Stellung a, b des Kippschalters 72 ist ein fester Überlappwert hinterlegt. In der Stellung a ist der Überlappwert groß gegenüber der Stellung b. Anschließend wird über den Sensor 40 eine Grashöhe und -dichte sensiert. Aus den sensierten Grasparametern wird von der Recheneinheit 12 ein weiterer Überlappwert berechnet. Die Überlappwerte des Kippschalters 72 und der sensierten Grasparameter werden zu einem Anfangsüberlapp gemittelt. In einem nächsten Schritt wird der Mähvorgang begonnen. Vor jedem Abfahren einer der Bahnen 16, 18, 20, 22, 24, 26, 28, 30, 32 wird eine erwartete Bahnlänge berechnet. Die Recheneinheit 12 ist dazu vorgesehen, bei einer Bestimmung einer erwarteten Bahnlänge vor dem Abfahren einer der Bahnen 16, 18, 20, 22, 24, 26, 28, 30, 32 eine eigene Position innerhalb einer Umrisskarte 44 zu bestimmen und einen Schnittpunkt einer erwarteten Bahnrichtung mit der Umrisskarte 44 zu berechnen. Ein Abstand des Schnittpunkts von der Position ergibt eine erwartete Bahnlänge. Aus dieser Bahnlänge wird über die Recheneinheit 12 ein Bahnlängenüberlapp berechnet, der wiederum mit dem Anfangsüberlapp temporär verrechnet wird. Der resultierende Überlapp 34 wird für diese Bahn 16, 18, 20, 22, 24, 26, 28, 30, 32 eingestellt. Nach Abschluss der Bahn 16, 18, 20, 22, 24, 26, 28, 30, 32 wird der resultierende Überlapp 34 zurück gestellt und es wird für eine neue Bahn 16, 18, 20, 22, 24, 26, 28, 30, 32 über die Bahnlänge und den Anfangsüberlapp ein neuer resultierender Überlapp 34 berechnet und eingestellt.

## Patentansprüche

1. Autonomer Rasenmäher mit einer Recheneinheit (12), der dazu vorgesehen ist, eine zu bearbeitende Fläche (14) in Bahnen (16, 18, 20, 22, 24, 26, 28, 30, 32) abzufahren, wobei die Recheneinheit (12) dazu vorgesehen ist, einen Überlapp (34) der Bahnen (16, 18, 20, 22, 24, 26, 28, 30, 32) abhängig von wenigstens einem Parameter einzustellen, wobei die Recheneinheit (12) dazu vorgesehen ist, zumindest einen Untergrundparameter zu berücksichtigen, wobei der Untergrundparameter als eine Grashöhe und/oder -dichte ausgebildet ist, wobei die Recheneinheit (12) einen Sensor (40) aufweist, der dazu vorgesehen ist, die Grashöhe und/oder -dichte zu sensieren, **dadurch gekennzeichnet, dass** die Recheneinheit (12) dazu vorgesehen ist, bei hohem und dichtem Gras gegenüber niedrigem und lichtem Gras den Überlapp (34) groß einzustellen.

2. Autonomer Rasenmäher nach Anspruch 1, **dadurch gekennzeichnet, dass** die Recheneinheit (12) dazu vorgesehen ist, den Überlapp (34) für verschiedene Teilbereiche (36, 38) und/oder für verschiedene Bahnen (16, 18, 20, 22, 24, 26, 28, 30, 32) der zu bearbeitenden Fläche (14) differenziert einzustellen.

3. Autonomer Rasenmäher nach einem der vorhergehenden Ansprüche, **dadurch gekennzeichnet, dass** die Recheneinheit (12) dazu vorgesehen ist, zumindest einen Bahnlängenparameter zu berücksichtigen.

4. Autonomer Rasenmäher nach einem der vorhergehenden Ansprüche, **dadurch gekennzeichnet, dass** die Recheneinheit (12) zumindest eine Eingabeeinheit (42) aufweist, welche dazu vorgesehen ist, manuelle Eingaben von Parametern durch einen Bediener aufzunehmen.

5. Autonomer Rasenmäher nach Anspruch 4, **dadurch gekennzeichnet, dass** die Recheneinheit (12) dazu vorgesehen ist, ein in die Eingabeeinheit (42) eingegebenes gewünschtes Ergebnis bei einer Einstellung des Überlapps (34) zu berücksichtigen.

6. Autonomer Rasenmäher zumindest nach Anspruch 4, **dadurch gekennzeichnet, dass** die Recheneinheit (12) dazu vorgesehen ist, einen in die Eingabeeinheit (42) eingegebenen Überlappparameter, für die zu bearbeitende Fläche (14) und/oder für verschiedene Teilbereiche (36, 38) und/oder Bedingungen der zu bearbeitenden Fläche (14), zu berücksichtigen.

7. Autonomer Rasenmäher zumindest nach Anspruch 3, **dadurch gekennzeichnet, dass** die Recheneinheit (12) dazu vorgesehen ist, bei einer Bestimmung einer erwarteten Bahnlänge vor dem Abfahren einer Bahn (16, 18, 20, 22, 24, 26, 28, 30, 32) eine eigene Position innerhalb einer Umrisskarte (44) zu bestimmen und einen Schnittpunkt einer erwarteten Bahnrichtung mit der Umrisskarte (44) zu berechnen.

8. Verfahren mit einem autonomen Rasenmäher (10) nach einem der vorhergehenden Ansprüche, wobei der Überlapp (34) der Bahnen (16, 18, 20, 22, 24, 26, 28, 30, 32) abhängig von wenigstens einem Parameter eingestellt wird, **dadurch gekennzeichnet, dass** bei hohem und dichtem Gras gegenüber niedrigem und lichtem Gras der Überlapp (34) groß eingestellt wird.

## Claims

1. Autonomous lawnmower which comprises a computing unit (12) and which is provided for traveling in strips (16, 18, 20, 22, 24, 26, 28, 30, 32) along a surface (14) to be processed, wherein the computing unit (12) is provided for setting an overlap (34) of the strips (16, 18, 20, 22, 24, 26, 28, 30, 32) as a function of at least one parameter, wherein the computing unit (12) is provided for taking into account at least one underlying surface parameter, wherein the underlying surface parameter is embodied as a grass height and/or grass density, wherein the computing unit (12) has a sensor (40) which is provided to sense the grass height and/or grass density, **characterized in that** the computing unit (12) is provided to set the overlap (34) to a large value in the case of high and dense grass as opposed to low and sparse grass.

2. Autonomous lawnmower according to Claim 1, **characterized in that** the computing unit (12) is provided for setting the overlap (34) in a differentiated fashion for various partial regions (36, 38) and/or for various strips (16, 18, 20, 22, 24, 26, 28, 30, 32) of the surface (14) to be processed.

3. Autonomous lawnmower according to one of the preceding claims, **characterized in that** the computing unit (12) is provided for taking into account at least one strip length parameter.

4. Autonomous lawnmower according to one of the preceding claims, **characterized in that** the computing unit (12) has at least one input unit (42) which is provided for registering manual inputs of parameters by an operator.

5. Autonomous lawnmower according to Claim 4, **characterized in that** the computing unit (12) is provided for taking into account a desired result, which has been input into the input unit (42), during the setting of the overlap (34).

6. Autonomous lawnmower according to at least Claim 4, **characterized in that** the computing unit (12) is provided for taking into account an overlap parameter, which has been input into the input unit (42), for the surface (14) to be processed and/or for various partial regions (36, 38) and/or conditions of the surface (14) to be processed.

7. Autonomous lawnmower according to at least Claim 3, **characterized in that** the computing unit (12) is provided for determining its own position within an outline map (44) and calculating an intersection point of an expected strip direction with the outline map (44) during the determination of an expected strip length before a strip (16, 18, 20, 22, 24, 26, 28, 30, 32) is traveled along.

8. Method having an autonomous lawnmower (10) according to one of the preceding claims, wherein the overlap (34) of the strips (16, 18, 20, 22, 24, 26, 28, 30, 32) is set as a function of at least one parameter, **characterized in that** the overlap (34) is set to a large value in the case of high and dense grass as opposed to low and sparse grass.

## Revendications

1. Tondeuse à gazon autonome comprenant une unité de calcul (12) conçue pour parcourir une surface (14) à traiter dans des couloirs (16, 18, 20, 22, 24, 26, 28, 30, 32), dans laquelle l'unité de calcul (12) est conçue pour régler un chevauchement (34) des couloirs (16, 18, 20, 22, 24, 26, 28, 30, 32) en fonction d'au moins un paramètre, dans laquelle l'unité de calcul (12) est conçue pour prendre en compte au moins un paramètre de sous-sol, dans laquelle le paramètre de sous-sol est défini comme étant une hauteur et/ou une densité du gazon, dans laquelle l'unité de calcul (12) comporte un capteur (40) qui est conçu pour détecter la hauteur et/ou la densité du gazon, **caractérisée en ce que** l'unité de calcul (12) est conçue pour régler le chevauchement (34) de manière à ce qu'il soit important dans le cas où le gazon est haut et dense par rapport au cas où le gazon est bas et peu dense.

2. Tondeuse à gazon autonome selon la revendication 1, **caractérisée en ce que** l'unité de calcul (12) est conçue pour régler le chevauchement (34) de manière différenciée pour différentes zones partielles (36, 38) et/ou différents couloirs (16, 18, 20, 22, 24, 26, 28, 30, 32) de la surface (14) à traiter.

3. Tondeuse à gazon autonome selon l'une des revendications précédentes, **caractérisée en ce que** l'unité de calcul (12) est conçue pour prendre en compte au moins un paramètre de longueur de couloir.

4. Tondeuse à gazon autonome selon l'une des revendications précédentes, **caractérisée en ce que** l'unité de traitement (12) comprend au moins une unité de saisie (42) qui est conçue pour recevoir la saisie manuelle de paramètres par un opérateur.

5. Tondeuse à gazon autonome selon la revendication 4, **caractérisée en ce que** l'unité de calcul (12) est conçue pour tenir compte d'un résultat souhaité saisi sur l'unité de saisie (42) lors du réglage du chevauchement (34).

6. Tondeuse à gazon autonome au moins selon la revendication 4, **caractérisée en ce que** l'unité de calcul (12) est conçue pour tenir compte d'un paramètre de chevauchement saisi sur l'unité de saisie (42) pour la surface (14) à traiter et/ou pour différentes zones partielles (36, 38) et/ou différents états de la surface (14) à traiter.

7. Tondeuse à gazon autonome au moins selon la revendication 3, **caractérisée en ce que** l'unité de calcul (12) est conçue pour déterminer, lors de la détermination d'une longueur de couloir prévue avant de parcourir un couloir (16, 18, 20, 22, 24, 26, 28, 30, 32), sa propre position dans une carte à contours (44) et pour calculer un point d'intersection d'une direction de couloir prévue avec la carte à contours (44).

8. Procédé comportant une tondeuse à gazon autonome (10) selon l'une des revendications précédentes, dans lequel le chevauchement (34) des couloirs (16, 18, 20, 22, 24, 26, 28, 30, 32) est ajusté en fonction d'au moins un paramètre, **caractérisé en ce que**, dans le cas où le gazon est haut et dense, le chevauchement (34) est réglé à une valeur importante par rapport au cas où le gazon est bas et peu dense.
